# EUROPEAN PATENT APPLICATION

(11) **EP 1 491 857 A1**
(43) Date of publication of application: **29.12.2004**
(21) Application number: 03014394.5
(22) Date of filing: 26.06.2003
(51) Int. Cl.: G01C 21/26

(54) **Method for assisting navigation and navigation system**

(71) Applicant: Harman Becker Automotive Systems GmbH, 76307 Karlsbad (DE)
(72) Inventor: Bruelle-Drews, Christian, 22159 Hamburg (DE)
(74) Representative: Grünecker, Kinkeldey, Stockmair & Schwanhäusser Anwaltssozietät

(57) **Abstract**

The invention is directed to an method for assisting navigation, comprising automatically determining information on an upcoming maneuver, automatically determining a current position, automatically determining information on an object in the vicinity of the current position, wherein the object is detected by at least one sensor, and processing the maneuver information and the information on the object in the vicinity to determine current combined navigation information.

## Description

The invention is directed to a method for assisting navigation, in particular, for a vehicle, and a navigation system.

Navigation systems are useful in many circumstances to provide a user with information on how to reach a pre-determined destination. Such navigation systems are implemented, for example, in handheld GPS devices. As another example, more and more vehicles such as cars are provided with navigation systems. In the context of vehicles, a navigation system assists the driver in providing driving instructions. In particular, a user can input a desired destination, for example, by choosing a specific destination out of a list of previously stored destinations or by entering corresponding coordinates. In addition to the input destination, the navigation system also determines a current position, usually with the aid of a GPS system. Alternatively, a starting position can also be input manually by a user. Based on the starting point (such as the current position) and the destination, the system then determines route information. Route information is information on how to reach a destination starting from a pre-determined starting point.

On the road, the driver is provided with driving instructions based on the route information. The driving instructions are output optically and/or acoustically. The optical output is performed by presenting corresponding information on a display. This information may consist of arrows indicating the driving direction and distance information, for example. Usually, the route information in determined based on a digitized (road) map stored in the system or being loadable into the system. Parts of such a map can also be shown on the display to further enhance the understanding of the driving instructions.

During use, the navigation system re-determines its current position. Such a re-determination can be based on sensor data relating to the vehicles movement such as its speed and direction of motion. Alternatively and/or additionally, position data can be obtained from a GPS system. Based on the current position data obtained in this way and the route information, the navigation system determines what kind of driving instructions is to be output at a specific time. In particular, if a maneuver such as turning left or right is to be performed, corresponding driving instructions are output at a certain time or distance in advance.

Thus, these prior art navigation systems enable a user to reach a specific destination even without knowing the way. In particular, a printed map is not necessary as long as a destination point and the way between starting point and destination point is part of a digitized map that is present in the navigation system.

More advanced navigation systems determine the route information not only based on the road information obtained from the digitized map. These navigation systems further take into account perturbations (e.g., traffic jams) occurring on the determined route. In particular, corresponding information on perturbations such as traffic jams can be received by these navigation systems upon which the system may determine an alternative route enabling the driver to bypass the traffic jam.

Even if a navigation system uses information on perturbations on a route such as traffic jams, the corresponding information has always to be retrieved from an external independent information source. For example, information regarding traffic jams can be received via TMC (traffic message channel). Thus, the navigation system is always dependent on an information source being located far away and on which the user has no influence. Furthermore, the corresponding information has to be transmitted to the information source and then to the navigation system which results in an undesirable delay of the information.

Therefore, it is the problem underlying the invention to provide a method for assisting navigation and a navigation system allowing a faster consideration of a change of conditions on the road, and thus, increasing comfort and safety of the user.

This problem is solved by a method according to claim 1 and a navigation system according to claim 15.

Accordingly, a method for assisting navigation is provided comprising:
a) automatically determining information on an upcoming maneuver,
b) automatically determining a current position,
c) automatically determining information on an object in the vicinity of the current position, wherein the object is detected by at least one sensor, and
d) processing the maneuver information and the information on the object in the vicinity to determine current combined navigation information.

Information on an upcoming maneuver, i.e., information on an upcoming position change, can be determined in different ways. For example, in a car environment, it can be determined whether one of the direction indicator lamps is active. In such a case a corresponding turn is to be expected. Preferably, information on an upcoming maneuver can be based on route information that has been determined using a navigation system.

Route information is the data specifying a route between two waypoints. Using a navigation system, route information can be determined in a number of different way. For example, a user can enter a starting point and a destination point (e.g., by choosing a starting and/or destination point out of a list of stored waypoints or by entering the coordinates of the waypoint) into the navigation system. Based on the two way points and a digitized map (particularly a digitized road map that can be stored in the navigation system, for example), the road information is determined by the navigation system. Alternatively, it is also possible that a route is loaded into the navigation system from a data carrier.

There are also different possibilities to automatically determine a current position. For example, a current position can be determined using satellite information such as in a GPS system. According to an alternative, a current position can also be determined using previous movement information via speed sensors, speed differential sensors for detecting speed differences between wheels (in the case of a vehicle), or gyro sensors, for example.

According to step c), information on an object in the vicinity of the current position is automatically determined, wherein the object is detected by at least one sensor. An object can be a vehicle such as a truck, a car, a motorbike or a bicycle. Furthermore, an object can also be a pedestrian, a traffic light, a sign posting, or a road marking, to give only some examples.

In the vicinity means within a specific distance or specific range from the current position. This specific distance or range may depend on the type of sensors used, in particular, on their range and/or on the environmental conditions such as the surrounding traffic and/or the current velocity. Furthermore, if the method is used for navigation in a vehicle, the specific distance or range can also depend on the type of vehicle. The vicinity can be given as that region that can be reached by a user or vehicle, for example, within a predetermined time.

The route information and the information on the object in the vicinity are processed to determine current combined navigation information. Combined navigation information is a combination of route information an information on one or several objects in the vicinity. Therefore, the inventive method allows to take into account information on objects in the surroundings of the current position. The combined navigation information can comprise driving instructions considering these objects. Thus, much more local information can influence the current navigation information, i.e., the information on how to navigate at a current time. In particular, this information considering the surroundings can be provided in real-time. Hence, in contrast to prior art navigation methods, the current combined navigation information comprises information with higher relevance to a specific user.

Preferably, in step c), information can be determined on a plurality of objects in the vicinity of the current position.

According to a preferred embodiment, step c) can comprise determining position, velocity, acceleration, dimension, shape, color and/or movement direction of the detected object. In this way, the determined information on an object comprises relevant parameters of the object, thus, allowing classification and identification of the objects.

According to another advantageous embodiment of the method, in step d), only a moving object (moving objects) can be considered in processing the maneuver information and the information on the object. In this way, a selection is made regarding the objects in the vicinity and the processing is simplified.

Preferably, step c) can comprise classifying the detected object according to a pre-determined criterion. It is advantageous if the pre-determined criterion is based on one of the previously mentioned relevant parameters such as velocity, shape or color. In particular, if the object is a vehicle, it can be classified according to its type such as car, motorbike, etc. As another example, if the object is a traffic light, it might be useful to determine the color of the light and to classify it accordingly. Furthermore, objects can be classified in moving or standing objects. In this way, highly relevant information on detected objects can be provided and combined with the route information.

According to a preferred embodiment, the current sensor data can be obtained from a sensor for electromagnetic waves and/or a sensor for pressure waves. Preferred sensors are laser sensors or laser scanner, ladars, radar sensors, cameras (that can be sensitive for specific wavelengths such as visible or infrared light) and/or ultrasound sensors. Depending on the type of sensor, different methods are to be used to determine information on the object. For example, when using a camera, imaging processing methods are to be implemented. The type of sensor is to be chosen according to the type of objects to be detected that, usually, also depends on the environment in which the sensor is to be used.

According to an advantageous embodiment, step d) can comprise determining a warning information regarding a detected object according to a pre-determined criterion. Warning information is information comprising an indication of a potential danger. The pre-determined criterion according to which warning information is determined can be based, for example, on the position, velocity or movement direction of the detected object. For example, warning information can be determined if an object is approaching the current position with a velocity higher than a pre-determined threshold (it is to be noted that this approaching can be due to a movement of the object and/or the current position).

Preferably, determining warning information can comprise determining current and/or expected movement parameters of the detected object and/or of the current position. The movement of the current position corresponds to the change of the position in time. Movement parameters comprise velocity, acceleration and movement direction. Determining one or several of these movement parameters can serve, for example, to determine whether a crash is to be expected and, if this is the case, to determine a corresponding warning information.

In many cases, it is mainly important to know the relative movement of the object and the current position, in other words, the movement of the object relative to the current position or, equivalently, the movement of the current position relative to the object. In such a case, it might not be necessary to determine independently the movements of both the object and the current position with respect to a further reference point.

Expected movement parameters can be determined in different ways. For example, by determining a current acceleration of an object, its future velocity can be calculated, e.g. based on the assumption of a constant acceleration. Expected movement parameters of the current position can be determined using current movement parameters; furthermore, the route information can be taken into consideration as well.

As an example, due to the route information, it can be possible to determine a change of movement direction in advance.

According to a further embodiment of the previously described method, step d) can comprise modifying the maneuver information depending on the information on the detected object. In this way, environmental conditions are taken into account for the current combined navigation information. This is particularly useful in the case, the maneuver information is based on route information. In particular, the route information can be re-determined if the detected object fulfills a predetermined criterion, thus, taking into consideration the information (such as the parameters of the object) on a detected object. As an example, an object can be detected indicating a closed road. In this case, a re-determination can be performed to obtain a new route bypassing the closed road.

Preferably, step c) of the previously described methods can be performed permanently or within pre-determined intervals in space and/or time. Thus, an update of the information on the surroundings can be adapted to environmental conditions or specific needs of the user. For example, if the method is used in a vehicle, permanently repeating step c) could be necessary in dense traffic in a city.

According to a preferred embodiment, all previously described methods can further comprise the step of acoustically and/or optically and/or haptically outputting the current combined navigation information. Due to such an output, a user is informed and provided with relevant navigation or driving instructions. In this way, safety can be increased.

Preferably, the outputting step can comprise outputting current information on the detected object, in particular, position, velocity, acceleration, dimension, shape, color and/or movement direction of the object. Thus, the user gets precise information on his environment.

Advantageously, the time and/or the format of the output can be determined depending on the current combined navigation information. The format of the output is, for example, whether the output is acoustical or optical. Furthermore, the format can be given by parameters such as the volume of the acoustical output, the color and type of signs to be used for the optical output. In particular, an output can be postponed or cancelled.

Advantageously, the outputting step can comprise setting a device in motion and/or modifying the movement properties of a movable device. For example, in the case of a car, a warning information can result in setting a steering wheel vibrating or in a tighter accelerator pedal.

According to a preferred embodiment, the outputting step can comprise assigning the current combined navigation information to one of at least two predetermined classes and outputting the current combined navigation information in a predetermined format for each of the classes. In particular, the formats for the different classes can be different. For example, the current combined navigation information can be classified into warning information and other information and, then, depending on the class, output in a predetermined, possibly different way. If warning information is determined in step d), it can be advantageous to always output such warning information in an acoustical way so as to ensure that the user does not miss this information.

The invention also provides a method for assisting navigation in a vehicle, preferably a car, the vehicle comprising a navigation system and at least one sensor to detect an object in the vicinity of the vehicle comprising the steps of the above described methods. Particularly in a vehicular environment, the method provides increased comfort and safety for a user, i.e. the driver of the vehicle.

Furthermore, the invention provides a computer program product directly loadable into an internal memory of a digital computer comprising software code portions for performing the steps of the previously described methods.

The invention also provides a computer program product stored on a medium readable by a computer system, comprising computer readable program means for causing a computer to perform the steps of the previously described methods.

In addition, a navigation system is provided, in particular, for performing the above described methods, comprising:
a means for determining information on an upcoming maneuver,
a means for determining a current position,
a means for receiving sensor data of a detected object in the vicinity of the current position and for determining information on the detected object, and
a means for processing the maneuver information and the information on the object in the vicinity to determine current combined navigation information.

Advantageously, the means for determining maneuver information can comprise a means for determining route information.

Preferably, the means of the navigation system can be configured so as to perform the steps of one of the previously described methods. This means, for example, the means for determining information on the detected object can be configured to determine position, velocity, acceleration, dimension, shape, color and/or movement direction of the detected object.

The invention also provides a vehicle comprising at least one sensor for detecting an object in the vicinity, a navigation system as described above and a means for outputting the current combined navigation information.

Preferably, the means for outputting is configured for acoustical and/or optical outputting the current combined navigation information, in particular, according to the above described method.

Further features and advantages will be described in the following examples and with reference to the figures.
- Fig. 1: schematically shows a vehicle with ranges of corresponding sensors;
- Fig. 2: illustrates the configuration of an example of a navigation system according to the invention;
- Fig. 3: illustrates raw data as obtained from a ladar sensor;
- Fig. 4: is a flow chart of an example of a method for assisting navigation;
- Fig. 5: illustrates the method for assisting navigation for an example of a traffic scenario;
- Fig. 6: illustrates the method for assisting navigation for a further example of a traffic scenario; and
- Fig. 7: illustrates the method for assisting navigation for a further example of a traffic scenario.

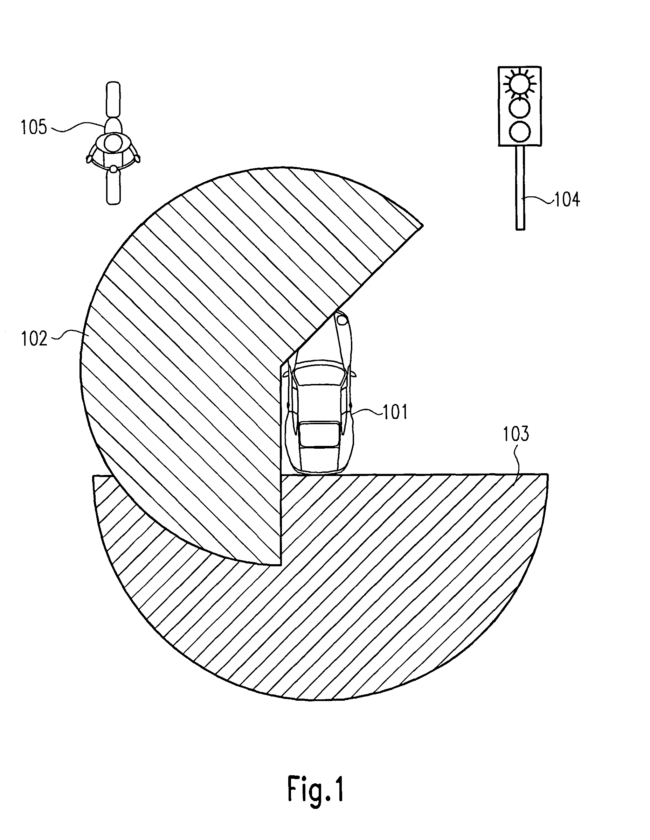

In Fig. 1, a vehicle 1 is shown being provided with sensors to detect objects in the vicinity of the vehicle. A first sensor is provided in the left rear mirror. The corresponding range 2 of this sensor is depicted schematically. As can be seen, this sensor covers an angular range of approximately 225°. Another sensor is located at the back of the vehicle, the range 3 of this sensor also being shown schematically. The angular range of this rear sensor covers approximately 180°.

Of course, the number, location and type of the sensors can be varied. For example, it might be useful to provide sensors with overlapping angular ranges that have different resolution and/or that are of different type. For example, a camera (sensitive in the visible, infrared or ultra-violet frequency range), a radar, a laser scanner, an ultrasound scanner and/or a ladar device can be provided. Each of these sensors has its own merits and can be used to detect different types and/or parameters of objects.

In Fig. 1, two objects to be possibly detected are present. First of all, vehicle 1 is approaching a traffic light 4. This traffic light can be detected by one or several sensors. For example, a first sensor can be provided which is particularly useful to detect immobile objects and to classify these objects according to their shape; i.e. such a sensor would be suitable to yield the necessary data in order to determine that object 4 is a traffic light. A further sensor can be provided, for example, a camera, enabling to distinguish different colors so as to determine that the light is red. Alternatively, a camera and a corresponding image processing means can be provided such that the classification of the object as a traffic light and it color can be obtained based only on the data of the camera.

In addition, a further object is approaching the vehicle, namely a motorbike 5 driving on the oncoming lane. In order to detect and classify this object in an appropriate way, it would be useful to have sensors yielding the necessary data to determine that object 5 is a motorbike and, furthermore, to determine its velocity and movement directions.

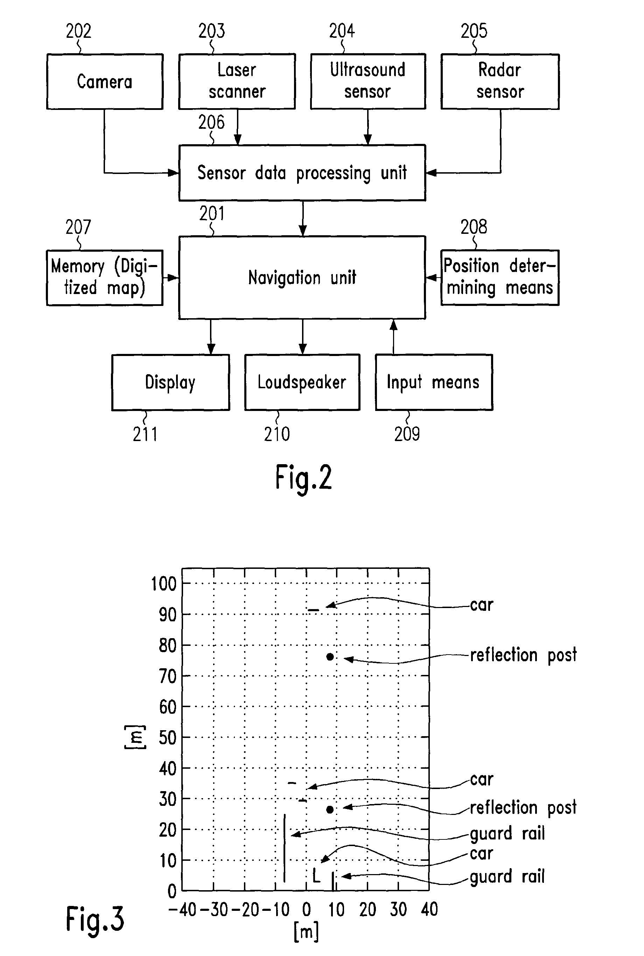

The construction and interplay of different parts of a navigation system is shown in Fig. 2. Data processing is performed in the navigation unit 201 that comprises a data processor. The navigation unit 201 further comprises different inputs and outputs to receive data such as sensor data and to provide data to be output acoustically and/or optically.

In this example of a navigation system, four sensors are present, namely, a camera 202, a laser scanner 203, an ultrasound sensor 204 and a radar sensor 205. Of course, a greater or smaller number of sensor may be present. Other types of sensors are also possible. The angular and distance range of the sensor may be different and, in particular, the ranges may also overlap.

Each of the sensors collects data and transmits these raw data to a sensor data processing unit 206. The sensor data processing unit 206 collects and processes these raw data. In particular, data processing unit 206 is configured to provide information on detected objects that can be used to provide navigation information to a driver. For example, the raw data can be processed so as to classify different objects according to their shape or movement parameters. Furthermore, sensor data processing unit 206 can be configured to merge the data received from the different sensors to obtain complete information on the surroundings of the vehicle.

In Fig. 2, sensor data processing unit is depicted separately from the navigation unit 201. However, the sensor data processing unit may be part of the navigation unit as well. Furthermore, the raw data of the sensors may already pre-processed in the sensors themselves. The sensors may also comprise filter means to enhance the signal quality and, in this way, of the sensor data.

The navigation system further comprises a memory 207 in which a digitized map is stored. The memory can be a non-volatile memory storing the digitized map. Alternatively, it is also possible to always load the map into a volatile memory from an external data carrier such as a CD ROM. The memory 207 is connected to the navigation unit 201 to provide map data to this navigation unit.

Furthermore, the navigation system comprises position determining means 208. This means are configured to determine the current position of the system and, in this way, of the corresponding vehicle. Determining the current position can be based on different methods. On the one hand, the means can comprise satellite based devices such as a GPS system. Instead of or in addition to such satellite based data, further data can be provided by speed sensors, acceleration sensors, speed differential sensors for detecting speed differences between the wheels of a vehicle and/or a compass to determine the current position. The position determining means may also be configured to receive current position data from an external position data source. The current position data is transmitted to the navigation unit 201.

Input means 209 are also provided to enable a user to input data. The input means can be configured to input a destination point, for example, by entering the respective coordinates or by choosing a destination out of a stored list of possible destination points. Furthermore, the input means can be configured to change parameters of the navigation system such as the format of the output.

Depending on the different input data stemming, for example, from the sensors and the position determining means, the navigation unit 201 processes this data to determine current combined navigation information. This navigation information comprises indications and/or instructions for a user on how to act in a given situation in order to reach a destination.

The navigation information can be output in different ways. For this, the navigation system comprises a loudspeaker 210 for acoustical output. Thus, driving instructions or other indications can be output by way of a male, female or computer-generated voice. A list of possible output words or phrases can be stored; in addition or alternatively, speech output can be synthesized by a corresponding speech synthesizing unit (not shown). Furthermore, speech output can be accompanied by additional sounds such as a beep. These additional sounds may vary according to the type of class (e.g., warning information) of output information.

The navigation information can also be output optically via a display 211. The optical output can comprises arrows to indicate a suggested movement direction and distance information. Furthermore, a sector of a map can be displayed as well.

It is also possible to depict schematically all or some of the detected objects on the display. In particular, the displayed objects may be shown on the display on positions corresponding to their actual position. Accordingly, the depicted objects can also be given colors depending on whether they are classified as a potential danger and, thus, correspond to warning information or not.

In addition to the optical and acoustical output or alternatively, the navigation unit can also be configured to set a device in motion or to modify the movement properties of a movable device. In this case, the navigation unit is connected to a corresponding device (not shown). For example, if a warning information has been determined, the navigation unit can set the steering wheel in motion in such a way that the wheel is vibrating. Alternatively or additionally, the accelerator pedal can be controlled to become tighter in case of a warning information.

Sensor raw data are depicted in Fig. 3. This figure illustrates ladar data as obtained by a ladar device mounted on front of a car that is driving on a highway. As can be seen in this figure, the range of this sensor is about 40 meters in each directions across the sensor and more than 90 meters in the viewing direction straight ahead. Different objects such as cars, reflection posts and guard rails can be distinguished via their different form in the sensor data. Such an identification of different objects can be obtained using an appropriate image processing method. As already mentioned before, some or all of these detected objects can be displayed graphically.

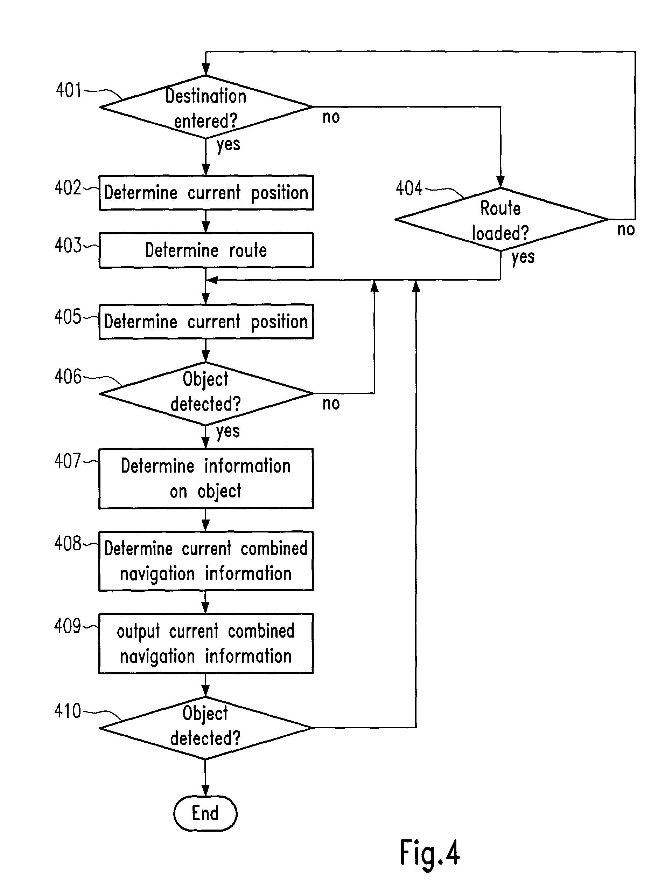

Fig. 4 illustrates a flow chart of an example of a method for assisting navigation according to the invention. After having started, in step 401, it is checked whether a destination has been entered by a user or not. The destination can be input manually (e.g., by choosing among a list of previously stored destination points).

If a destination has been entered, a current position is determined in step 402. This can be done, for example, using a GPS system or by retrieving a position that has been stored the previous time the system was used. However, it is also possible to input the current position manually, for example, by entering coordinates by the user.

Based on the destination point and the current position, a route is determined in step 403. This route determination uses a digitized map available to the system. The digitized map can be stored in the system or loaded from an external data carrier.

If no destination has been entered, it is checked in step 404 whether - according to an alternative possibility - a route has been loaded, for example, that has been stored previously in the navigation system. If yes, the method continues as after step 403. If no, the method returns to the beginning and awaits further instructions.

The next steps are part of a loop that can be repeated regularly as long as the destination has not been reached. First of all, in step 405, the current position is determined. This can be done in different ways using absolute and/or relative positional data as already explained above.

In step 406, it is checked whether one of the sensors has detected an object. If no, the method returns to step 405.

If yes, i.e. if an object has been detected, information on the object is determined in step 407. This step can include determining movement parameters such as velocity and movement direction, shape, dimension, etc. and classifying the object according to predetermined criteria. The parameters of the object need not be determined based on information obtained from a single sensor but can result from a combination of data stemming from different sensors. The different classes in which an object can be classified may include road user (for example with subclasses: bicycle, motorbike, car, truck) and road sign (for example with subclasses: traffic light, prohibition sign, speed limit).

Step 407 can also include to determine whether a potential crash with the detected object is to be expected.

A detected object can be classified according to a predetermined criterion in step 407 as well. For example, in this step, each object can be classified as moving object or standing object. This can be achieved by comparing the absolute (with respect to a predetermined fixed coordinate system) velocity and movement direction of the current position and the relative velocity and movement direction of the current position with respect to the detected object. Depending on whether the object is a moving object or a standing object, this information can be used differently when determining the current combined navigation information. As an example, the navigation system can be configured so as to not take into account standing objects.

As an additional or alternative classification, objects can be classified according to their location with respect to the current position. Then, objects can be taken into account only if they are located within a specific region. For example, the region can cover all points that can be reached (e.g., based on the current or a maximum velocity and movement direction) within a predetermined time. In the case of a moving vehicle, the region can comprise the street section in front of the vehicle in movement direction.

In step 408, current combined navigation information is determined. In this step, the route information and the information on the objects are to be combined. In particular, it is to be determined whether the route information and, particularly, the driving instructions are to be modified. If, for example, in the previous steps, it has been determined that the road in which the vehicle has to turn off after 100 meters is blocked, the system can decide to re-determine the route from the current position to the destination point taking into account this constraint. This possibility is depicted by the dashed line in the flow chart. In other words, it may be decided to re-determine route information in step 408.

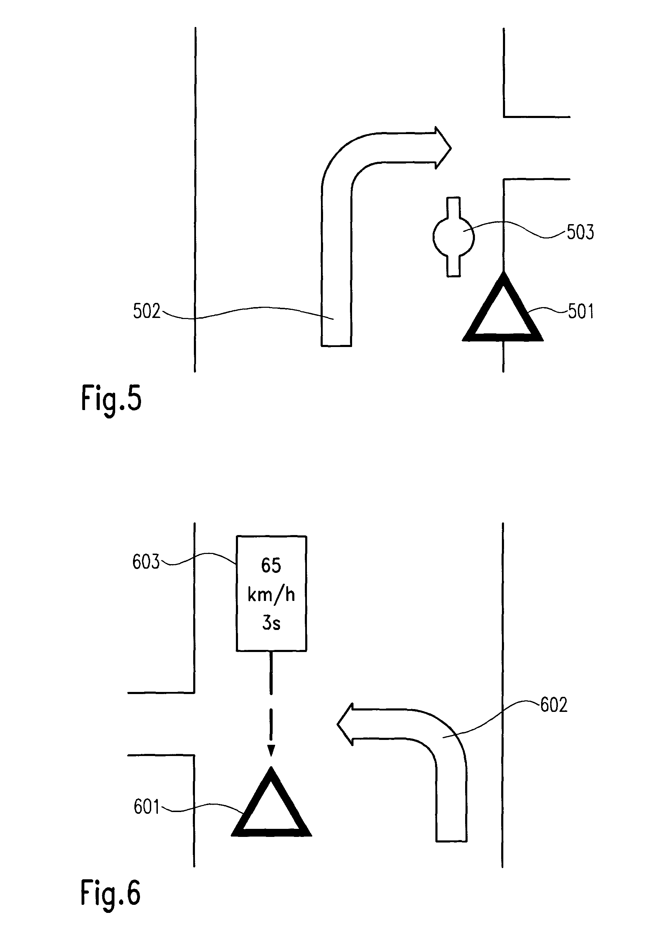

Alternatively, after having determined a road sign with speed limit, the route information can be combined with an instruction to reduce the speed. As another example, the system may have determined a large number of cars and deduced dense traffic therefrom. Based on this information, the route information may be modified so as to instruct the driver to change the lane earlier than previously intended based on the route information only. Further example of scenarios will be explained with reference to Figs. 5 - 7.

In step 409, output is provided to the user. Depending on the results of step 408, the output can be performed in an optical and/or acoustical way. In particular, the current combined navigation information may have been assigned to different classes of navigation information. Each class of navigation may have a corresponding type of output format, some or all of these types of output format being different.

For example, if in step 408, a warning information has been determined (that the user is driving at high speed towards a red light, for example), the corresponding message will be necessarily output acoustically in order to warn the driver. Alternatively, if some information on objects has been determined as being of less importance, this information can be output only optically.

In the next step 410, it will be tested whether the destination has been reached. If no, the loop is repeated starting from step 405.

Figs. 5 - 7 illustrate possible display outputs for different exemplary traffic scenarios in a vehicular context.

In Fig. 5, a traffic scenario is shown where the driver - according to the route information - should turn right. In this scenario, the bare route information would result in simply instructing the driver to turn to his right. However, due to appropriate sensors, a bicycle has been determined (using the navigation system) to the right hand side of the car. The information on this detected object is combined with the route information by the navigation system. In view of the intended turn, the navigation system recognizes a potentially dangerous situation; thus, a corresponding warning information is determined.

The output of the combined current navigation information comprises both the driving instruction (regarding turning right) and the warning information. In the example shown, the display shows an output of the type presented in Fig. 5. First of all, a section of a digitized map with the currently relevant roads is depicted. An arrow instructs the driver which route to follow, namely to turn right. To indicate that a potential danger is present, a warning sign 501 is displayed, requiring the user to drive with increased attention. Furthermore, in order to specify in more detail the potential danger, a pictogram 503 signifying a cyclist can be displayed as well. Preferably, as displayed in the Figure, the pictogram of the cyclist is shown at a position corresponding to the real cyclist's position with respect to the car. Due to such an optical output, the driver receives all necessary information enabling him to drive carefully and taking into account special circumstances in the surroundings, thus, increasing roadworthiness.

Furthermore, in addition to this optical output, an acoustical output can be provided as well. This is particularly useful in the case of a warning information; then, an additional acoustical output ensures that the user does not miss the warning information. In the present example, an acoustical output of the form "caution cyclist" can be provided to the user. Thus, in this case, a warning information has been determined and is output both acoustically and optically.

An alternative scenario is shown in Fig. 6. In this case, due to the determined route, the driver is instructed to turn to his left. However, an object approaching with high velocity has been detected on the oncoming lane. In view of this, warning information has been determined by the navigation system which takes this into account when determining a combined current navigation information. The presence of a potentially dangerous situation is pointed out to the driver via a warning sign 601. In addition, an arrow 602 is shown in the context of a road map on the display, indicating the driving direction. Furthermore, the velocity of the object and the expected time to pass can also be displayed (603) to provide more detailed information on potential danger.

As in the previous case, in addition to this optical output, an acoustical output can be provided to catch the driver's attention. Such an acoustical output can have the form "caution oncoming traffic", for example.

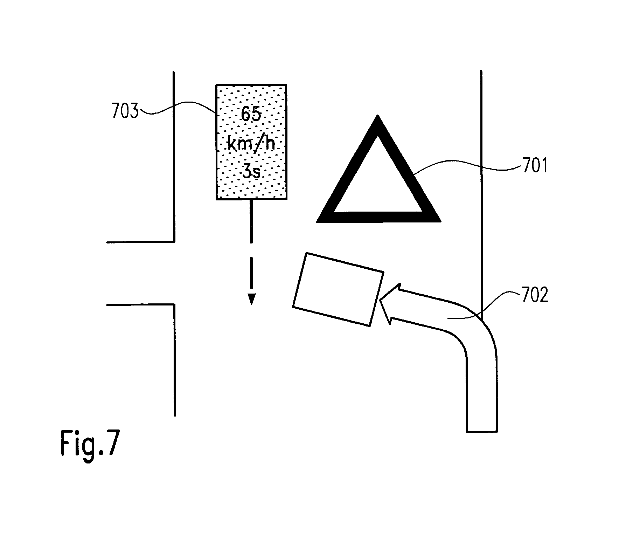

Should the driver nevertheless start turning to his left, as indicated in the case of Fig. 7, the navigation system detects that a collision is to be expected. Hence, a warning information regarding a potential collision is determined. Then, in addition to the driving instruction given by the arrow 702, a corresponding collision warning is output. The navigation system can have determined that this warning is very important and, thus, has an even higher priority. In such a case, the warning sign 701 can be shown in an enlarged form and the sign 703 depicting the oncoming object can be displayed in a different color such as red.

In addition to the optical output, a corresponding acoustical output can also have a different format than in the case of other (less dangerous) scenarios. For example, the warning can be output at increased volume and/or by including a beep.

Of course, there is a plurality of further scenarios where a navigation system and the method to assist navigation according to the invention is useful. For example, route information or driving instructions can be output in a more precise way adapted to the traffic such as "please get into the left lane behind the truck". Furthermore, depending on the determined information on objects in the vicinity, a driving instruction can also be suppressed that under normal circumstances, based on the route information only, would have been output. In this way, both the formal (optically and/or acoustically) and the time (at the time as determined based on route information only, sooner, later, or not at all) are adapted and determined according to the situation in the surroundings.

## Claims

1. Method for assisting navigation, comprising:
a) automatically determining information on an upcoming maneuver,
b) automatically determining a current position,
c) automatically determining information on an object in the vicinity of the current position, wherein the object is detected by at least one sensor, and
d) processing the maneuver information and the information on the object in the vicinity to determine current combined navigation information.

2. Method according to claim 1, wherein step c) comprises determining position, velocity, acceleration, dimension, shape, color and/or movement direction of the detected object.

3. Method according to claim 1 or 2, wherein step c) comprises classifying the detected object according to a pre-determined criterion.

4. Method according to one of the preceding claims, wherein the current sensor data is obtained from a sensor for electromagnetic waves and/or a sensor for pressure waves.

5. Method according to one of the preceding claims, wherein step d) comprises determining a warning information regarding a detected object according to a pre-determined criterion.

6. Method according to claim 5, wherein determining a warning information comprises determining current and/or expected movement parameters of the detected object and/or of the current position.

7. Method according to one of the preceding claims, wherein step d) comprises modifying the maneuver information depending on the information on the detected object.

8. Method according to one of the preceding claims, wherein step c) is performed permanently or within pre-determined intervals in space and/or time.

9. Method according to one of the preceding claims, further comprising the step of acoustically and/or optically and/or haptically outputting the current combined navigation information.

10. Method according to claim 9, wherein the outputting step comprises outputting current information on the detected object, in particular, position, velocity, acceleration, dimension, shape, color and/or movement direction of the object.

11. Method according to claim 9 or 10, wherein the time and/or the format of the output is determined depending on the determined information on the detected object.

12. Method according to one of the claims 9 - 11, wherein the outputting step comprises setting a device in motion and/or modifying the movement properties of a movable device.

13. Method according to one of the claims 9 - 12, wherein the outputting step comprises assigning the current combined navigation information to one of at least two predetermined classes and outputting the current combined navigation information in a predetermined format for each of the classes.

14. Method for assisting navigation in a vehicle, the vehicle comprising a navigation system and at least one sensor to detect an object in the vicinity of the vehicle, comprising the steps of the method according to one of the claims 1 - 13.

15. Computer program product directly loadable into an internal memory of a digital computer, comprising software code portions for performing the steps of the method according to one of the claims 1 to 14.

16. Computer program product stored on a medium readable by a computer system, comprising computer readable program means for causing a computer to perform the steps of the method according to one of the claims 1 to 14.

17. Navigation system, in particular, for performing the method according to one of the claims 1 - 14, comprising:
a means for determining information on an upcoming maneuver,
a means for determining a current position,
a means for receiving sensor data of a detected object in the vicinity of the current position and for determining information on the detected object, and
a means for processing the maneuver information and the information on the object in the vicinity to determine current combined navigation information.

18. Vehicle comprising at least one sensor for detecting an object in the vicinity, a navigation system according to claim 17, and a means for outputting the current combined navigation information.
